# EUROPEAN PATENT APPLICATION

(11) **EP 4 840 537 A1**
(43) Date of publication of application: **18.11.2026**
(21) Application number: 24916949.1
(22) Date of filing: 26.12.2024
(51) Int. Cl.: B01J 20/06, A23B 2/717, B01D 53/14, B01J 20/02, B01J 20/28, B01J 20/30, B65D 81/26

(54) **OXYGEN SCAVENGER COMPOSITION**

(30) Priority: 12.01.2024 JP 2024003124; 19.07.2024 JP 2024115973
(71) Applicant: MITSUBISHI GAS CHEMICAL COMPANY, INC., Chiyoda-ku Tokyo 100-8324 (JP)
(72) Inventor: SOMEYA, Masao, Tokyo 125-8601 (JP); NAKATA, Takashi, Tokyo 125-8601 (JP)
(74) Representative: Müller-Boré & Partner Patentanwälte PartG mbB
(86) International application number: PCT/JP2024/046185
(87) International publication number: WO 2025/150447

(57) **Abstract**

There is provided an oxygen scavenger composition including a metal halide-coated iron powder (A) having an iron oxide on iron surface, and a moisture imparting agent (B), wherein the proportion of iron element in the iron powder except the metal halide and moisture in the metal halide-coated iron powder (A) is 90.0 to 96.3% by mass. There are also provided a method for producing an oxygen scavenger composition, an oxygen scavenger package, and a method of oxygen scavenging.

## Description

### Technical Field

The present invention relates to an oxygen scavenger composition.

### Background Art

A method of using an oxygen scavenger is known as a storage technique for food products, pharmaceutical products, and the like. In this method, an article to be stored and the oxygen scavenger are enclosed and hermetically sealed in a sealed container having a gas-barrier property, whereby oxygen in the sealed container is absorbed by the oxygen scavenger and the atmosphere in the sealed container can be kept substantially in an oxygen-free state. As the function of the oxygen scavenger, the oxygen scavenger needs to be small in size and to absorb much oxygen. In other words, there is required an oxygen scavenger composition large in oxygen amount to be absorbed per unit volume.

Typical oxygen scavengers include iron-based oxygen scavengers containing iron (iron powder) as their main agent and non-iron-based oxygen scavengers containing ascorbic acid, glycerol or the like as their main agent. Oxygen scavengers are suitably selected according to applications, but iron-based oxygen scavengers, from the viewpoint of the oxygen absorption performance, are broadly used.

With regard to the iron-based oxygen scavengers, there are a case (moisture-dependent type) of using water vapor (evaporation from food products, or the like) in the environment to be deoxidized and a case (self-reacting type) where a moisture carrier is in advance co-included in an oxygen scavenger; the self-reacting type oxygen scavenger, since including a moisture imparting agent, has an advantage of being capable of absorbing oxygen even in a state of a relatively low external humidity.

As an oxidation promoter for efficiently supplying moisture from the moisture imparting agent to the iron surface, a metal halide or the like is used.

For example, PTL1 discloses, with the aim of obtaining an oxygen scavenger high in the oxygen absorption capacity while being compact and inexpensive, the oxygen scavenger composed of an iron powder, an oxidation promoting substance, a filler, and a moisture donor of a diatomaceous earth, having an adsorption property exhibiting a relative humidity of 55% or higher when containing 2% of moisture, to be made to contain moisture.

### Citation List

### Patent Literature

PTL1: JP 5-237374 A

### Summary of Invention

### Technical Problem

As described above, since the moisture-dependent type oxygen scavenger can exhibit the oxygen scavenging performance only in the environment where moisture can be supplied from the outside, its uses are limited. The self-reaction type oxygen scavenger, though having an advantage of being capable of absorbing oxygen even in a state of a relatively low external humidity, comes to react instantly on being contacted with oxygen, posing such a problem that in the course of being enclosed in products, the reaction progresses and the oxygen scavenging performance ends in being deteriorated.

On the other hand, when a self-reaction type oxygen scavenger is produced without any blended oxidation promoter, the initial oxidation reaction can be suppressed, but the oxygen absorption performance after the oxygen scavenger is enclosed in products is inferior and the oxygen scavenger comes not to have sufficient performance as an oxygen scavenger.

The present invention has been achieved in consideration of such a situation and an object of the present invention is to provide a self-reaction type oxygen scavenger composition suppressed in the initial oxygen absorption, and capable of exhibiting sufficient oxygen absorption performance also after being handled for a certain time in the air.

### Solution to Problem

The present inventors have found that an oxygen scavenger composition comprising a metal halide-coated iron powder having an iron oxide on the surface of a specific iron, and a moisture imparting agent can solve the above problem, and this finding has led to the completion of the present invention.

That is, the present invention relates to the following [1] to [22].
[1] An oxygen scavenger composition comprising: a metal halide-coated iron powder (A) having an iron oxide on iron surface; and a moisture imparting agent (B), wherein the proportion of iron element in the iron powder except the metal halide and moisture in the metal halide-coated iron powder (A) is 90.0 to 96.3% by mass.
[2] The oxygen scavenger composition according to the above [1], wherein the average particle diameter of the metal halide-coated iron powder (A) is 30 to 500 µm.
[3] The oxygen scavenger composition according to the above [1] or [2], wherein the metal halide is at least one selected from the group consisting of calcium chloride, sodium chloride, calcium bromide and sodium bromide.
[4] The oxygen scavenger composition according to any one of the above [1] to [3], wherein the content of the metal halide in the metal halide-coated iron powder (A) is, with respect to 100 parts by mass of the iron powder except the metal halide and moisture in the metal halide-coated iron powder (A), 0.10 part by mass or higher and 1.00 part by mass or lower.
[5] The oxygen scavenger composition according to any one of the above [1] to [4], wherein the moisture imparting agent (B) is a carrier impregnated with water.
[6] The oxygen scavenger composition according to any one of the above [1] to [5], wherein the moisture imparting agent (B) comprises sodium chloride.
[7] The oxygen scavenger composition according to the above [5] or [6], wherein the amount of the water contained in the moisture imparting agent (B) is, with respect to 100 parts by mass of the iron powder except the metal halide and moisture in the metal halide-coated iron powder (A), 15 to 60 parts by mass.
[8] The oxygen scavenger composition according to any one of the above [5] to [7], wherein the carrier is at least one selected from the group consisting of zeolite, diatomaceous earth, silica gel, perlite, vermiculite, active alumina, activated clay, active carbon and bentonite.
[9] A method for producing an oxygen scavenger composition, comprising: step 1 of mixing an iron powder (a) and an aqueous solution of a metal halide in an oxygen-containing gas atmosphere and drying the resultant to obtain a metal halide-coated iron powder (A) having an iron oxide on iron surface; and step 2 of mixing the metal halide-coated iron powder (A) and a moisture imparting agent (B), wherein the amount of the metal halide contained in the aqueous solution of a metal halide is, with respect to 100 parts by mass of the iron powder (a), 0.10 part by mass or larger and 1.00 part by mass or smaller.
[10] The method for producing an oxygen scavenger composition according to the above [9], wherein the amount of the water contained in the aqueous solution of a metal halide is, with respect to 100 parts by mass of the iron powder (a), 10 to 20 parts by mass.
[11] The method for producing an oxygen scavenger composition according to the above [9] or [10], wherein the concentration of the aqueous solution of a metal halide is 0.1 to 10% by mass.
[12] The method for producing an oxygen scavenger composition according to any one of the above [9] to [11], wherein the step 1 comprises the drying by self-heating in the mixing.
[13] The method for producing an oxygen scavenger composition according to any one of the above [9] to [12], wherein the average particle diameter of the iron powder (a) is 30 to 500 µm.
[14] The method for producing an oxygen scavenger composition according to any one of the above [9] to [13], wherein the metal halide is at least one selected from the group consisting of calcium chloride, sodium chloride, calcium bromide and sodium bromide.
[15] The method for producing an oxygen scavenger composition according to any one of the above [9] to [14], wherein the moisture imparting agent (B) is a carrier impregnated with water.
[16] The method for producing an oxygen scavenger composition according to any one of the above [9] to [15], wherein the moisture imparting agent (B) comprises sodium chloride.
[17] The method for producing an oxygen scavenger composition according to the above [15] or [16], wherein the amount of the water contained in the moisture imparting agent (B) is, with respect to 100 parts by mass of the iron powder except the metal halide and moisture in the metal halide-coated iron powder (A), 15 to 60 parts by mass.
[18] The method for producing an oxygen scavenger composition according to any one of the above [15] to [17], wherein the carrier is at least one selected from the group consisting of zeolite, diatomaceous earth, silica gel, perlite, vermiculite, active alumina, activated clay, active carbon and bentonite.
[19] An oxygen scavenger package, comprising: an oxygen scavenger composition according to any one of the above [1] to [8]; and an air-permeable packaging container for accommodating the oxygen scavenger composition.
[20] A method for producing an oxygen scavenger package, comprising accommodating an oxygen scavenger composition according to any one of the above [1] to [8] in an air-permeable packaging container.
[21] A method of oxygen scavenging, comprising accommodating an oxygen scavenger composition according to any one of the above [1] to [8] or an oxygen scavenger package according to the above [19], and an article to be stored, in a gas barrier container.
[22] The method of oxygen scavenging according to the above [21], wherein the article to be stored is a food product, an industrial product or a pharmaceutical product.

### Advantageous Effects of Invention

According to the present invention, there can be provided an oxygen scavenger composition suppressed in the initial oxygen absorption, and capable of exhibiting sufficient oxygen absorption performance also after being handled for a certain time in the air.

### Description of Embodiments

### [Oxygen scavenger composition]

The oxygen scavenger composition of the present invention comprises a metal halide-coated iron powder (A) having an iron oxide on iron surface, and a moisture imparting agent (B), wherein the proportion of iron element in the iron powder except the metal halide and moisture in the metal halide-coated iron powder (A) is 90.0 to 96.3% by mass.

The reason that the oxygen scavenger composition of the present invention is suppressed in the initial oxygen absorption, and capable of exhibiting sufficient oxygen absorption performance also after being handled for a certain time in the air, is not clear, but is conceivably as follows.

When the metal halide-coated iron powder and the moisture imparting agent coexist in an oxygen-free state, the humidity in the atmosphere rises due to the moisture imparting agent. The metal halide coating the iron powder thereby deliquesces and moisture adheres on the iron powder surface. It is conceivable that at this time, the specific surface area becomes larger due to the presence of an iron oxide on the iron powder surface to make the metal halide to be highly dispersed and the moisture adhering on the iron powder surface also to be in a highly dispersed state. On coming into contact with air in this state, the moisture adhering on the iron powder surface transpires and thereby immediately disappears. In order for the iron powder to be from here again oxidized, the metal halide needs to again deliquesce, and the period required for the again deliquescing suppresses the initial oxygen absorption, conceivably making the loss of the effect by oxygen absorption less even when the composition is handled in the air. Hence, it is conceivable that the oxygen absorption performance is retained and the sufficient oxygen absorption performance can be exhibited also after the composition is handled in the air. Further, it is also conceivable that due to that an iron oxide is present on the iron powder surface and makes an oxide film, the initial oxygen absorption is further suppressed.

### <metal halide-coated iron powder (A)>

The metal halide-coated iron powder (A) contained in the oxygen scavenger composition of the present invention has an iron oxide on iron surface, wherein the proportion of iron element in the iron powder except the metal halide and moisture in the metal halide-coated iron powder (A) is 90.0 to 96.3% by mass.

Then, the metal halide-coated iron powder (A) usually further has absorbed moisture on iron surface. The moisture present on the surface is a residue on evaporation of moisture originated from a raw material to be used in production of the metal halide-coated iron powder, or is one taken in by moisture absorption from the air after the production, moisture absorption from the moisture imparting agent, and the like. The calculation of the proportion of iron element in the iron powder, in the case where moisture is present on iron surface, is made by subtracting the content of the moisture. The content of the moisture is measured by a moisture meter. Specifically, the moisture content can be measured by a heating vaporization Karl Fischer moisture meter (manufactured by Kyoto Electronics Mfg. Co. Ltd., "MKC-610") or the like.

The average particle diameter (D50) of the metal halide-coated iron powder (A) is, from the viewpoint of making the contact with oxygen good, preferably 3,000 µm or smaller, more preferably 1,000 µm or smaller, still more preferably 500 µm or smaller and further still more preferably 200 µm or smaller, and then, from the viewpoint of suppressing generation of dust, preferably 1 µm or larger, more preferably 10 µm or larger, still more preferably 30 µm or larger and further still more preferably 40 µm or larger. More specifically, the average particle diameter (D50) of the metal halide-coated iron powder (A) is preferably 1 to 3,000 µm, more preferably 10 to 1,000 µm, still more preferably 30 to 500 µm and further still more preferably 40 to 200 µm.

The average particle diameter can be measured as an average particle size (D50) at a cumulative frequency of 50% in a volume-base particle size distribution by a commercially available laser diffraction/scattering particle size distribution analyzer (LA-960, manufactured by HORIBA Ltd.) or the like.

### (Iron powder)

The "iron powder except the metal halide and moisture in the metal halide-coated iron powder (A)" will be described, hereinafter in the present paragraph, simply as "iron powder". That is, the "iron powder" in the present paragraph is an "iron powder except the metal halide in the metal halide-coated iron powder (A) and further except moisture present on the surface". Further, the "iron powder except the metal halide in the metal halide-coated iron powder (A) and further except moisture present on the surface" is distinguished from a "raw material iron powder" later described.

The iron powder has an iron oxide on iron surface and the proportion of iron element in the iron powder is 90.0 to 96.3% by mass.

Components other than the above iron element include oxygen and hydrogen, and are mainly oxygen. That is, it is preferable that an iron oxide is present on the surface of the iron powder to be used for the oxygen scavenger composition of the present invention and the proportion of iron element on the surface is low, and in the interior of the iron powder, the proportion of iron element is high.

The proportion of iron element in the iron powder is 90.0 to 96.3% by mass, and preferably 92.0 to 96.3% by mass, more preferably 93.0 to 96.3% by mass, still more preferably 93.0 to 96.0% by mass, further still more preferably 93.0 to 95.8% by mass and further still more preferably 93.0 to 95.0% by mass. When the proportion of iron element in the iron powder is in the above range, the initial oxygen absorption is suppressed and handling thereof in the air becomes easy. The proportion of iron element in the iron powder is a proportion determined by a calibration curve method using an inductively coupled plasma (ICP) atomic emission spectrometer. More specifically, the proportion of iron element in the iron powder can be determined by a method described in Examples.

The iron powder (iron powder except the metal halide and moisture in the metal halide-coated iron powder (A)) can be produced by oxidizing a raw material iron powder. As the raw material iron powder to become a raw material, reduced iron powder, electrolytic iron powder, atomized iron powder or the like can suitably be used, and crushed or milled cast iron or the like can also be used. Among these, a preferable raw material iron powder is at least one selected from the group consisting of reduced iron powder, electrolytic iron powder and atomized iron powder, and a more preferable one is atomized iron powder.

Here, the "raw material iron powder" refers to an iron powder to become a raw material of the metal halide-coated iron powder (A), and to the iron powder to become the raw material before regulation of the amount of the iron oxide on the surface and before coating of the metal halide. An "iron powder (a)" in a method for producing an oxygen scavenger composition described later is also included in the "raw material iron powder".

The raw material iron powders can be used singly, or as required, in combination of two or more. Further, a commercially available one may be used.

The average particle diameter (D50) of the iron powder is, from the viewpoint of making the contact with oxygen good, preferably 3,000 µm or smaller, more preferably 1,000 µm or smaller, still more preferably 500 µm or smaller and further still more preferably 200 µm or smaller, and then, from the viewpoint of suppressing generation of dust, preferably 1 µm or larger, more preferably 10 µm or larger, still more preferably 30 µm or larger and further still more preferably 40 µm or larger. More specifically, the average particle diameter (D50) of the iron powder is preferably 1 to 3,000 µm, more preferably 10 to 1,000 µm, still more preferably 30 to 500 µm and further still more preferably 40 to 200 µm.

The average particle diameter (D50) of the raw material iron powder is, from the viewpoint of making the contact with oxygen good, preferably 3,000 µm or smaller, more preferably more preferably 1,000 µm or smaller, still more preferably 500 µm or smaller and further still more preferably 200 µm or smaller, and then, from the viewpoint of suppressing generation of dust, preferably 1 µm or larger, more preferably 10 µm or larger, still more preferably 30 µm or larger and further still more preferably 40 µm or larger. More specifically, the average particle diameter (D50) of the iron powder is preferably 1 to 3,000 µm, more preferably 10 to 1,000 µm, still more preferably 30 to 500 µm and further still more preferably 40 to 200 µm.

The average particle diameter can be measured as an average particle size (D50) at a cumulative frequency of 50% in a volume-base particle size distribution obtained by a laser diffraction/scattering particle size distribution analysis. The average particle diameter can be measured by a commercially available laser diffraction/scattering particle size distribution analyzer (LA-960, manufactured by HORIBA Ltd.) or the like.

The specific surface area of the raw material iron powder is, from the viewpoint of the oxygen absorption performance, preferably 0.03 m²/g or larger and more preferably 0.05 m²/g or larger, and then, from the viewpoint of suppressing the generation of dust, preferably 0.20 m²/g or smaller, more preferably 0.10 m²/g or smaller and still more preferably 0.09 m²/g or smaller. More specifically, the specific surface area of the raw material iron powder is 0.03 m²/g or larger and 0.20 m²/g or smaller, more preferably 0.03 m²/g or larger and 0.10 m²/g or smaller and still more preferably 0.05 m²/g or larger and 0.09 m²/g or smaller.

Then, the specific surface area of the raw material iron powder can be measured by a BET multipoint method.

The proportion of iron element in the raw material iron powder is preferably 90% by mass or higher, and since the concentration of iron element in the iron powder needs to be controlled by oxidation, it is preferable that the purity of iron element in the raw material iron powder is high. The proportion of iron element in the raw material pure iron powder is more preferably 95% by mass or higher, still more preferably 97% by mass or higher, further still more preferably 99% by mass or higher and further still more preferably 99.5% by mass or higher.

It is preferable that the iron powder (iron powder except the metal halide and moisture in the metal halide-coated iron powder (A)) is obtained by oxidizing the surface of the raw material iron powder. A method of oxidizing the surface includes oxidation using air, oxidation using a chemical, and oxidation using water, and may be a suitable combination of these. Among these, a method of oxidation in the presence of a metal halide solution described later is more preferable because the coating with the metal halide and the surface oxidation of the iron powder can be achieved simultaneously, and the amount of the metal halide coated and the amount of oxidation on the surface, that is, the iron concentration in the iron powder, can easily be controlled.

### (Metal halide)

The metal halide-coated iron powder (A) has a metal halide present on the iron powder surface.

The metal halide is a substance to act catalytically on the oxidation reaction of iron and improve the activity of the iron. Further, the metal halide serves to prevent water contained in the oxygen scavenger composition from transpiring and being lost from the oxygen scavenger composition.

The presence of the metal halide on the iron powder surface enables moisture to be taken in on the iron powder surface by utilizing the deliquescence phenomenon of the metal halide.

As the metal halide, any one can be used without particular limitation as long as being a usually known one.

The metal in the metal halide is not especially limited, but include one or more selected from the group consisting of alkali metals, alkaline earth metals, copper, zinc, aluminum, tin, iron, cobalt and nickel. Among these, preferable is one or more selected from the group consisting of alkali metals, alkaline earth metals and iron; more preferable is one or more selected from the group consisting of lithium, potassium, sodium, magnesium, calcium, barium and iron; still more preferable is one or more selected from the group consisting of sodium and calcium; and further still more preferable is calcium.

The halide of the metal halide is not especially limited, but includes chlorides, bromides and iodides, and is preferably one or more selected from the group consisting of chlorides and bromides and more preferably a chloride.

The metal halide is, from the viewpoint of handleability, safety and the like, preferably at least one selected from the group consisting of calcium chloride, sodium chloride, calcium bromide, sodium bromide, calcium iodide and sodium iodide, more preferably at least one selected from the group consisting of calcium chloride, sodium chloride, calcium bromide and sodium bromide, still more preferably at least one selected from the group consisting of calcium chloride, calcium bromide and sodium bromide, and further still more preferably calcium chloride.

The metal halides can be used singly, or as required, in combination of two or more. These metal halides may be anhydrides or hydrates, and easily commercially available ones may be used.

The content of the metal halide in the metal halide-coated iron powder (A) is, with respect to 100 parts by mass of the iron powder except the metal halide and moisture in the metal halide-coated iron powder (A), preferably 0.10 part by mass or higher and 1.00 part by mass or lower.

The content of the metal halide is, from the viewpoint of improving the activity of the iron, suppressing transpiration of moisture in the oxygen scavenger composition, securing moisture on the iron powder surface and the like, with respect to 100 parts by mass of the iron powder except the metal halide and moisture in the metal halide-coated iron powder (A), more preferably 0.10 part by mass or higher and 0.70 part by mass or lower, and further, from the viewpoint of being capable of suppressing the initial oxygen absorption, still more preferably 0.10 part by mass or higher and 0.50 part by mass or lower, further still more preferably 0.10 part by mass or higher and 0.30 part by mass or lower and further still more preferably 0.10 part by mass or higher and 0.20 part by mass or lower.

Here, the content of the metal halide in the present invention is a content only of the metal halide. That is, in the case where the metal halide in the metal halide-coated iron powder (A) is in a hydrate state, the content of the metal halide is an amount except water of hydration in the hydrate of the metal halide.

The content of the metal halide can be calculated from the amount of the metal halide added in production of the metal halide-coated iron powder. In the case where a mass proportion in a sample is unknown, for example, in the case where the total analysis of a metal halide-coated iron powder produced cannot be carried out, the quantification can be carried out, for example, by the following method.

1 g of a metal halide-coated iron powder is precisely weighed. 50 mL of pure water is added to the metal halide-coated iron powder and well stirred, and then filtered. This operation is repeated three times, and filtrates are all collected and mixed; and to the mixture, 5 mL of a 400-µg/mL Co standard solution (manufactured by Kanto Chemical Co,. Inc., for chemical analysis) was added and pure water was added so as to make a volume of 200 mL to thereby obtain a measuring liquid. The measuring liquid is measured by a multi-ICP atomic emission spectrometer (SPECTRO ARCOS, manufactured by SPECTRO Analytical Instruments GmbH), and the amount of the metal halide in the measuring liquid, that is, the amount of the metal halide added in 1 g of the metal halide-coated iron powder, can be determined from the intensity ratio of measuring objects, the metal halide to Co, and a calibration curve separately prepared.

### <Moisture imparting agent (B)>

The oxygen scavenger composition of the present invention comprises a moisture imparting agent (B).

The moisture imparting agent (B) is preferably an agent impregnated with water (moisture carrier). The moisture imparting agent (B) supplies water to the iron.

The carrier suffices if being one capable of supplying carried moisture to the metal halide-coated iron powder (A), and a particulate material is generally suitably used. The carrier is preferably at least one selected from the group consisting of zeolite, diatomaceous earth, silica gel, perlite, vermiculite, active alumina, activated clay, active carbon and bentonite, and more preferably at least one selected from the group consisting of zeolite, diatomaceous earth and active carbon.

The amount of water to be contained in the moisture imparting agent (B) is, with respect to 100 parts by mass of the iron powder except the metal halide and moisture in the metal halide-coated iron powder (A), preferably 15 to 60 parts by mass, more preferably 20 to 60 parts by mass, still more preferably 30 to 60 parts by mass, further still more preferably 40 to 60 parts by mass and further still more preferably 40 to 55 parts by mass. When the amount of water contained in the moisture imparting agent (B) is in the above range, moisture can suitably be supplied to the metal halide-coated iron powder (A), and the initial oxygen absorption rate and the oxygen absorption performance can be balanced.

The moisture imparting agent (B) contains preferably sodium chloride. Due to that the moisture imparting agent (B) contains sodium chloride, the moisture activity can be regulated and the initial oxygen absorption rate and the oxygen absorption performance can be balanced.

The amount of sodium chloride to be contained in the moisture imparting agent (B) is, with respect to 100 parts by mass of water to be contained in the moisture imparting agent (B), preferably 3 to 45 parts by mass, more preferably 4 to 40 parts by mass, still more preferably 15 to 37 parts by mass, further still more preferably 25 to 37 parts by mass and further still more preferably 30 to 37 parts by mass. When the amount of sodium chloride to be contained in the moisture imparting agent (B) is in the above range, the moisture activity can be regulated and the initial oxygen absorption rate and the oxygen absorption performance can be balanced.

### [Method for producing the oxygen scavenger composition]

The oxygen scavenger composition of the present invention may be obtained by any production method, but is preferably obtained by a production method of the present invention described below.

The production method of the present invention comprises step 1 of mixing an iron powder (a) and an aqueous solution of a metal halide in an oxygen-containing gas atmosphere and drying the resultant to obtain a metal halide-coated iron powder (A) having an iron oxide on iron surface, and step 2 of mixing the metal halide-coated iron powder (A) and a moisture imparting agent (B), wherein the amount of the metal halide contained in the aqueous solution of a metal halide is, with respect to 100 parts by mass of the iron powder (a), 0.10 part by mass or higher and 1.00 part by mass or smaller.

### <Step 1: a step of obtaining a metal halide-coated iron powder (A)>

The production method of the present invention comprises step 1 of mixing an iron powder (a) and an aqueous solution of a metal halide in an oxygen-containing gas atmosphere and drying the resultant to obtain a metal halide-coated iron powder (A) having an iron oxide on iron surface, wherein the amount of the metal halide contained in the aqueous solution of a metal halide is, with respect to 100 parts by mass of the iron powder (a), 0.10 part by mass or higher and 1.00 part by mass or smaller.

By carrying out the step 1, there can be obtained the metal halide-coated iron powder (A) in which the proportion of iron element in the iron powder except the metal halide and moisture in the metal halide-coated iron powder (A) is 90.0 to 96.3% by mass.

In the present step, first, the iron powder (a) and the aqueous solution of a metal halide are mixed in an oxygen-containing gas atmosphere.

### (Iron powder (a))

The iron powder (a) is an iron powder to become a raw material of the metal halide-coated iron powder (A), and is preferably the iron powder described in the description of the raw material iron powder. Specifically, the iron powder (a) is an iron powder indicated below.

As the iron powder (a), reduced iron powder, electrolytic iron powder, atomized iron powder or the like can suitably be used; preferably, at least one selected from the group consisting of reduced iron powder, electrolytic iron powder and atomized iron powder is used, and more preferably, atomized iron powder is used. Crushed or milled cast iron or the like can also be used.

The iron powders (a) can be used singly, or as required, in combination of two or more. Commercially available products may be used.

The average particle diameter (D50) of the iron powder (a) is, from the viewpoint of making the contact with oxygen good, preferably 3,000 µm or smaller, more preferably 1,000 µm or smaller, still more preferably 500 µm or smaller and further still more preferably 200 µm or smaller, and then, from the viewpoint of suppressing generation of dust, preferably 1 µm or larger, more preferably 10 µm or larger, still more preferably 30 µm or larger and further still more preferably 40 µm or larger. More specifically, the average particle diameter (D50) of the iron powder (a) is preferably 1 to 3,000 µm, more preferably 10 to 1,000 µm, still more preferably 30 to 500 µm and further still more preferably 40 to 200 µm.

The average particle diameter can be measured as an average particle size (D50) at a cumulative frequency of 50% in a volume-base particle size distribution by a commercially available laser diffraction/scattering particle size distribution analyzer (LA-960, manufactured by HORIBA Ltd.) or the like.

The specific surface area of the iron powder (a) is, from the viewpoint of the oxygen absorption performance, preferably 0.03 m²/g or larger and more preferably 0.05 m²/g or larger, and then, from the viewpoint of suppressing the generation of dust, preferably 0.20 m²/g or smaller, more preferably 0.10 m²/g or smaller and still more preferably 0.09 m²/g or smaller. More specifically, the specific surface area of the iron powder (a) is preferably 0.03 m²/g or larger and 0.20 m²/g or smaller, more preferably 0.03 m²/g or larger and 0.10 m²/g or smaller and still more preferably 0.05 m²/g or larger and 0.09 m²/g or smaller.

Then, the specific surface area of the iron powder (a) can be measured by a BET multipoint method.

### (Aqueous solution of a metal halide)

As the metal halide to be contained in the aqueous solution of a metal halide, any one can be used without particular limitation as long as being a usually known one.

The metal in the metal halide is not especially limited, but includes one or more selected from the group consisting of alkali metals, alkaline earth metals, copper, zinc, aluminum, tin, iron, cobalt and nickel. Among these, preferable is one or more selected from the group consisting of alkali metals, alkaline earth metals and iron; more preferable is one or more selected from the group consisting of lithium, potassium, sodium, magnesium, calcium, barium and iron; still more preferable is one or more selected from the group consisting of sodium and calcium; and further still more preferable is calcium.

The halide of the metal halide is not especially limited, but includes chlorides, bromides and iodides, and is preferably one or more selected from the group consisting of chlorides and bromides and more preferably a chloride.

The metal halide is, from the viewpoint of handleability, safety and the like, preferably at least one selected from the group consisting of calcium chloride, sodium chloride, calcium bromide, sodium bromide, calcium iodide and sodium iodide, more preferably at least one selected from the group consisting of calcium chloride, sodium chloride, calcium bromide and sodium bromide, still more preferably at least one selected from the group consisting of calcium chloride, calcium bromide and sodium bromide, and further still more preferably calcium chloride.

The metal halides can be used singly, or as required, in combination of two or more. These metal halides may be anhydrides or hydrates, and easily commercially available ones may be used.

The amount of the metal halide to be used is, with respect to 100 parts by mass of the iron powder (a), preferably 0.10 part by mass or higher and 1.00 part by mass or lower.

The amount of the metal halide to be used is, with respect to 100 parts by mass of the iron powder (a), preferably 0.10 part by mass or higher and 0.70 part by mass or lower, more preferably 0.10 part by mass or higher and 0.50 part by mass or lower, still more preferably 0.10 part by mass or higher and 0.30 part by mass or lower and further still more preferably 0.10 part by mass or higher and 0.20 part by mass or lower.

Here, the amount of the metal halide to be used is an amount only of the metal halide to be used. That is, in the case where the metal halide to be used for the aqueous solution of a metal halide is a hydrate, the amount of the metal halide to be used is an amount except water of hydration in the hydrate of the metal halide.

The amount of water to be contained in the aqueous solution of a metal halide is, with respect to 100 parts by mass of the iron powder (a), preferably 10 to 20 parts by mass, more preferably 15 to 20 parts by mass, still more preferably 16 to 20 parts by mass and further still more preferably 16 to 19 parts by mass. When the amount of water to be contained in the aqueous solution of a metal halide is in the above range, the proportion of iron element in the iron powder can be regulated in the range of 90.0 to 96.3% by mass, and the initial oxygen absorption rate and the oxygen absorption performance can be balanced.

The concentration of the aqueous solution of a metal halide is preferably 0.08 to 10% by mass, more preferably 0.1 to 10% by mass, still more preferably 0.1 to 4% by mass, further still more preferably 0.2 to 3% by mass and further still more preferably 0.4 to 2% by mass. The concentration of the aqueous solution of a metal halide is a mass proportion of the metal halide to the whole amount (mass) of the aqueous solution. When the concentration of the aqueous solution of a metal halide is in the above range, the proportion of iron element in the iron powder can be regulated in the range of 90.0 to 96.3% by mass, and the initial oxygen absorption rate and the oxygen absorption performance can be balanced.

### (Mixing)

In the present step, the mixing is carried out in an oxygen-containing gas atmosphere.

The oxygen-containing gas is preferably oxygen or a mixed gas of nitrogen and oxygen, and more preferably a mixed gas of nitrogen and oxygen. The mixed gas of nitrogen and oxygen is still more preferably air. Using of air is simple. By using air, the proportion of iron element in the iron powder can be regulated in the range of 90.0 to 96.3% by mass, and the initial oxygen absorption rate and the oxygen absorption performance can be balanced.

### (Drying)

Then, the drying is carried out to thereby obtain the metal halide-coated iron powder (A) having an iron oxide on iron surface.

The drying may be carried out by heating after the mixing has finished, but it is preferable to be carried out simultaneously with the mixing.

That is, it is preferable that by mixing the aqueous solution and the iron powder (a) at a higher temperature than room temperature to cause water in the aqueous solution to be slowly volatilized, the drying is carried out.

Since oxidation reaction is caused on the iron surface in the mixing time, the drying may be carried out by self-heating at this time; or the drying may be carried out by heating from the outside for speedy drying. Among these, drying by self-heating is preferable because the proportion of iron element in the iron powder can be regulated in the range of 90.0 to 96.3% by mass, and the initial oxygen absorption rate and the oxygen absorption performance can be balanced.

That is, in the step 1, preferably, the drying is carried out by self-heating in the mixing time of the iron powder (a) and the aqueous solution of a metal halide.

### <Step 2: a step of mixing the metal halide-coated iron powder (A) and a moisture imparting agent (B)>

The production method of the present invention comprises, following the step 1, step 2 of mixing the metal halide-coated iron powder (A) obtained in the step 1 and a moisture imparting agent (B).

The moisture imparting agent (B) is the above-mentioned moisture imparting agent (B), and will be described specifically hereinafter.

### (Moisture imparting agent (B))

The moisture imparting agent (B) to be used in the present step is preferably an agent impregnated with water (moisture carrier). The moisture imparting agent (B) serves to supply water to the iron powder.

The carrier suffices if being capable of supplying carried moisture to the metal halide-coated iron powder (A), and a particulate material is generally suitably used. The carrier is preferably at least one selected from the group consisting of zeolite, diatomaceous earth, silica gel, perlite, vermiculite, active alumina, activated clay, active carbon and bentonite, and more preferably at least one selected from the group consisting of zeolite, diatomaceous earth and active carbon.

The amount of water to be contained in the moisture imparting agent (B) is, with respect to 100 parts by mass of the iron powder except the metal halide and moisture in the metal halide-coated iron powder (A), preferably 15 to 60 parts by mass, more preferably 20 to 60 parts by mass, still more preferably 30 to 60 parts by mass, further still more preferably 40 to 60 parts by mass and further still more preferably 40 to 55 parts by mass. The amount of water to be contained in the moisture imparting agent (B) is, with respect to 100 parts by mass of the metal halide-coated iron powder (A), preferably 15 to 60 parts by mass, more preferably 20 to 60 parts by mass, still more preferably 30 to 60 parts by mass, further still more preferably 40 to 60 parts by mass and further still more preferably 40 to 55 parts by mass. When the amount of water to be contained in the moisture imparting agent (B) is in the above range, moisture can suitably be supplied to the metal halide-coated iron powder (A), and the initial oxygen absorption rate and the oxygen absorption performance can be balanced.

The moisture imparting agent (B) comprises preferably sodium chloride. Due to that the moisture imparting agent (B) comprises sodium chloride, the moisture activity can be regulated and the initial oxygen absorption rate and the oxygen absorption performance can be balanced.

The amount of sodium chloride to be contained in the moisture imparting agent (B) is, with respect to 100 parts by mass of the amount of water to be contained in the moisture imparting agent (B), preferably 3 to 45 parts by mass, more preferably 4 to 40 parts by mass, still more preferably 15 to 37 parts by mass, further still more preferably 25 to 37 parts by mass and further still more preferably 30 to 37 parts by mass. When The amount of sodium chloride to be contained in the moisture imparting agent (B) is in the above range, the moisture activity can be regulated and the initial oxygen absorption rate and the oxygen absorption performance can be balanced.

### (Mixing)

In the present step, the metal halide-coated iron powder (A) obtained in the step 1 and the moisture imparting agent (B) are mixed.

A mixing method is not especially limited, and the mixing may be carried out in such a way that in production of an oxygen scavenger package described later, the metal halide-coated iron powder (A) and the moisture imparting agent (B) are put in an air-permeable packaging container; or the metal halide-coated iron powder (A) and the moisture imparting agent (B) are mixed in a container for mixing and put in an air-permeable packaging container; or the metal halide-coated iron powder (A) and the moisture imparting agent (B) are mixed in a container for mixing and put the mixture directly in a product. Among these, it is preferable that the mixing is carried out by putting the metal halide-coated iron powder (A) and the moisture imparting agent (B) in an air-permeable packaging container, or by a method of mixing the metal halide-coated iron powder (A) and the moisture imparting agent (B) in a container for mixing and putting the mixture in an air-permeable packaging container.

### [Oxygen scavenger package]

The oxygen scavenger package of the present invention is an oxygen scavenger package comprising the oxygen scavenger composition and an air-permeable packaging container for accommodating the oxygen scavenger composition.

That is, the oxygen scavenger package of the present invention is specifically an oxygen scavenger package comprising: the oxygen scavenger composition which comprises the metal halide-coated iron powder (A) having an iron oxide on iron surface, and the moisture imparting agent (B), and in which the proportion of iron element in the iron powder except the metal halide and moisture in the metal halide-coated iron powder (A) is 90.0 to 96.3% by mass; and an air-permeable packaging container for accommodating the oxygen scavenger composition.

### (Air-permeable packaging container)

The air-permeable packaging container is not especially limited as long as being a container composed of a packaging material to be used in oxygen scavenger applications, but from the viewpoint that the oxygen scavenger package exhibits a sufficient oxygen absorption performance, at least contains an air-permeable packaging material, and includes, for example, one in which two sheets of air-permeable packaging material are laminated to make a bag form, one in which one sheet of air-permeable packaging material and one sheet of non-air-permeable packaging material are laminated to make a bag form, and one in which one sheet of air-permeable packaging material is folded and edges except the folded portion are sealed to make a bag form. The air-permeable packaging container besides includes a container in which an air-permeable packaging material is affixed to an opening surface of a non-air-permeable stiff container.

Here, in the case where the air-permeable packaging material and the non-air-permeable packaging material are of a quadrilateral shape, the air-permeable packaging container includes one in which two sheets of the air-permeable packaging material are superposed and four sides are heat sealed to make a bag form, one in which one sheet of the air-permeable packaging material and one sheet of the non-air-permeable packaging material are superposed and four sides are heat sealed to make a bag form, and one in which one sheet of the air-permeable packaging material is folded and three sides except the folded portion are heat sealed to make a bag form. Further, the packaging material may also be one in which the air-permeable packaging material is made into a cylindrical shape and both ends and the trunk portion of the cylindrical body are heat sealed to make a bag form.

### (Air-permeable packaging material)

As the air-permeable packaging material, there are selected packaging materials which oxygen and water vapor can permeate. Among these, there is suitably used one which has an air resistance by a Gurley tester method of 600 seconds or less, more preferably 90 seconds or less. Here, the air resistance refers to a value measured by the method of JIS P8117(1998). More specifically, the air resistance refers to the time taken for 100 mL of air to permeate an air-permeable packaging material as measured by using a Gurley densometer (manufactured by Toyo Seiki Seisaku-sho Ltd.).

As the air-permeable packaging material, there can be used paper, nonwoven fabric and besides, ones in which the air permeability is imparted to a plastic film. As the plastic film, there can be used, for example, a laminated film in which a film of polyethylene terephthalate, polyamide, polypropylene, polycarbonate or the like and a film, as a seal layer, of polyethylene, an ionomer, polybutadiene, an ethylene-acrylic acid copolymer, an ethylene-methacrylic acid copolymer, an ethylene-vinyl acetate copolymer or the like are laminated and adhered. Further, laminated products of these can also be used as the air-permeable packaging material.

A method of imparting the air permeability can adopt, in addition to piercing machining using cold needles or hot needles, various types of methods. In the case where the air permeability is provided by piercing machining, the air permeability can optionally be regulated by the diameter and the number of perforations to be pierced, the material and the like.

It is preferable that the thickness of the laminated film is 50 to 300 µm; being 60 to 250 µm is especially preferable. In this case, as compared with the case where the thickness is out of the above range, the packaging material can be made one which holds the strength and is excellent in the heat sealability and the packaging suitability.

### (Non-air-permeable packaging material)

As the non-air-permeable packaging material, a packaging material to be used in oxygen scavenger applications can be used, and a packaging material is suitable which can block moisture, alcohols, oils and solid components from stored articles, and has sealability. The non-air-permeable packaging material specifically includes laminates having an oxygen permeability of 0.05 to 20 mL/m²·24hr·atm (25°C, 50%RH) like polyethylene terephthalate- or nylon-based co-extruded multilayer sheets or films.

### [Method for producing the oxygen scavenger package]

A method for producing the oxygen scavenger package is not especially limited, but it is preferable that the oxygen scavenger package is obtained by the following production method of the present invention.

The production method of the present invention comprises accommodating the oxygen scavenger composition in the air-permeable packaging container.

A method of accommodating the oxygen scavenger composition in the air-permeable packaging container may be a method in which as described above, the metal halide-coated iron powder (A) and the moisture imparting agent (B) to constitute the oxygen scavenger composition are mixed by being put in the air-permeable packaging container to form the oxygen scavenger composition in the air-permeable packaging container to thereby accommodate the oxygen scavenger composition in the air-permeable packaging container, or may also be a method in which the metal halide-coated iron powder (A) and the moisture imparting agent (B) are in advance mixed and the obtained oxygen scavenger composition is accommodated in the air-permeable packaging container. From the viewpoint of producing the oxygen scavenger package simply and in a short time and suppressing excessive oxidation reaction, preferable is the method in which the metal halide-coated iron powder (A) and the moisture imparting agent (B) to constitute the oxygen scavenger composition are mixed by being put in the air-permeable packaging container to form the oxygen scavenger composition in the air-permeable packaging container to thereby accommodate the oxygen scavenger composition in the air-permeable packaging container.

### [Method of oxygen scavenging]

The method of oxygen scavenging of the present invention is a method of oxygen scavenging which comprises accommodating the oxygen scavenger composition or the oxygen scavenger package and an article to be stored in a gas barrier container.

The method of oxygen scavenging of the present invention preferably is a method of oxygen scavenging which comprises accommodating the oxygen scavenger package and an article to be stored in a gas barrier container.

The oxygen scavenger composition to be used in the method of oxygen scavenging of the present invention is specifically, as described above, the oxygen scavenger composition which comprises the metal halide-coated iron powder (A) having an iron oxide on iron surface, and the moisture imparting agent (B), and in which the proportion of iron element in the iron powder except the metal halide and moisture in the metal halide-coated iron powder (A) is 90.0 to 96.3% by mass.

The oxygen scavenger package to be used in the method of oxygen scavenging of the present invention is specifically, as described above, the oxygen scavenger package comprising: the oxygen scavenger composition which comprises the metal halide-coated iron powder (A) having an iron oxide on iron surface, and the moisture imparting agent (B), and in which the proportion of iron element in the iron powder except the metal halide and moisture in the metal halide-coated iron powder (A) is 90.0 to 96.3% by mass; and the air-permeable packaging container for accommodating the oxygen scavenger composition.

### (Gas barrier container)

The gas barrier container is not especially limited as long as being capable of being hermetically sealed and substantially having gas barrier properties, and can suitably be selected according to properties, applications, cost and the like of an article to be stored.

If the article to be stored is one consumed in a short time, even a container relatively inferior in gas barrier properties suffices; and if the article to be stored is one needing long-period storage or sensitive to oxygen, a container having high gas barrier properties is needed.

From the viewpoint of blocking the air permeation from and to the outside, it is preferable that the gas barrier container is constituted of the above non-air-permeable packing material. Specifically, there can be used simply bags or packaging containers composed of laminates having an oxygen permeability of 0.05 to 20 mL/m²·24hr·atm (25°C, 50%RH), like polyethylene terephthalate- or nylon-based co-extruded multilayer sheets or films, and multilayer sheets or films having lamination structures such as polyethylene terephthalate/aluminum deposition/polyethylene, stretched polypropylene/polyvinyl alcohol/polyethylene, and polyvinylidene chloride-coated stretched nylon/polyethylene.

As the gas barrier container, besides the above, metal cans, glass bottles, plastic containers and the like can also be used.

The article to be stored is preferably one capable of preventing quality deterioration by avoiding contacting with oxygen, and preferably a food product, industrial product or pharmaceutical product.

Hitherto, the embodiments of the present invention have been described, but the present invention is not limited to the above embodiments, and includes every aspect included in the concept and the claims of the present invention, and may be variously modified within the scope of the present invention.

### Examples

Hereinafter, the present embodiments will be described in detail by way of Examples and Comparative Examples, but the present embodiments may suitably be changed as long as the operation and effect of the present invention is attained. Here, "parts" in Examples and Comparative Examples means, unless otherwise specified, parts by mass. Various measurements and evaluations in Examples and Comparative Examples were carried out as follows.

### <Proportion of iron element in an iron powder>

The proportion of iron element in the iron powder except the metal halide and moisture in the metal halide-coated iron powder was measured by a calibration curve method using an inductively coupled plasma (ICP) atomic emission spectrometer.

### (Fabrication of a calibration curve)

A 1,000-µg/mL Fe standard solution (manufactured by Kanto Chemical Co,. Inc., for chemical analysis) was diluted with 5 mL of a 400-µg/mL Co standard solution (manufactured by Kanto Chemical Co,. Inc., for chemical analysis), 1 mL of hydrochloric acid and pure water so as to make a volume of 100 mL to thereby prepare standard solutions for calibration of 0, 10, 20, 40 and 60 µg/mL in Fe concentration. The standard solutions for calibration were measured by a multi-ICP atomic emission spectrometer (SPECTRO ARCOS, manufactured by SPECTRO Analytical Instruments GmbH), and a calibration curve of the Fe/Co amount ratio vs. the Fe/Co intensity ratio was fabricated.

### (Preparation of a measuring liquid)

0.5 g of a metal halide-coated iron powder was precisely weighed in a 100-mL glass beaker and 5 mL of hydrochloric acid was added, and the beaker was covered with a watch glass. Then, the beaker was heated in an oven at 150°C for 1 hour. After being allowed to cool, a solution in the beaker was transferred to a 100 mL-volume polypropylene container, and the whole thereof was poured with pure water in the container to make up 100 g of the Fe aqueous solution. Then, to a 100 mL measuring flask, 0.5 g of the Fe aqueous solution, 5 mL of a 400-µg/mL Co standard solution (manufactured by Kanto Chemical Co,. Inc., for chemical analysis) and 1 mL of hydrochloric acid were added and pure water was added so as to make a volume of 100 mL to thereby obtain a measuring solution.

### (Measurement of the proportion of iron element)

The above measuring solution was measured by a multi-ICP atomic emission spectrometer (SPECTRO ARCOS, manufactured by SPECTRO Analytical Instruments GmbH), and the amount of iron element in the measuring solution was determined from the Fe/Co intensity ratio and the above calibration curve. The proportion of iron element in the iron powder except the metal halide and moisture in the metal halide-coated iron powder was determined by the following expression. 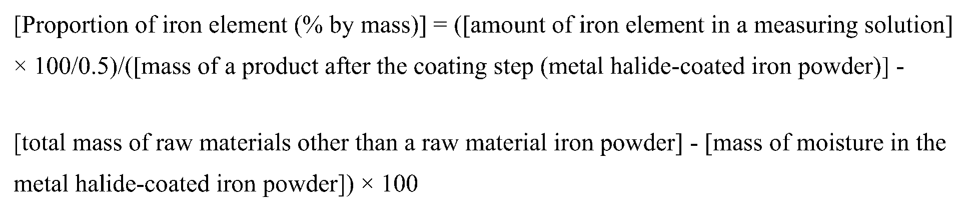 [Proportion of iron element (% by mass)] = ([amount of iron element in a measuring solution] × 100/0.5)/([mass of a product after the coating step (metal halide-coated iron powder)] - [total mass of raw materials other than a raw material iron powder] - [mass of moisture in the metal halide-coated iron powder]) × 100

In Examples 1 to 6 and Comparative Examples 1 and 2, the "the total mass of the raw materials other than the raw material iron powder" was the mass of the metal halide. Then, the mass of moisture in the metal halide-coated iron powder was measured by using 0.3 g of the metal halide-coated iron powder and by a heating vaporization Karl Fischer moisture meter (manufactured by Kyoto Electronics Mfg. Co. Ltd., MKC-610).

### <Proportion of iron element in the raw material iron powder>

The proportion of iron element in the raw material iron powder was also determined by using an inductively coupled plasma (ICP) atomic emission spectrometry as in the above-mentioned <proportion of iron element in the iron powder>.

### <Oxygen absorption performance of an oxygen scavenger composition>

A rubber sheet for sampling (25 mm × 25 mm, thickness: 2 mm) was adhered to one surface of an aluminum bag (aluminum foil laminate plastic film bag, 350 mm × 400 mm) to obtain an aluminum bag for measuring.

Then, an oxygen scavenger package (containing an oxygen scavenger composition containing 1.00 g of a metal halide-coated iron powder) obtained in Examples and Comparative Examples and 3,000 mL of air were accommodated in the aluminum bag for measuring, and the opening was heat sealed. Then, the resultant aluminum bag was quickly put in a thermostatic chamber at 25°C.

After 2 hours and 48 hours from the sealing, the oxygen concentration in the aluminum bag was measured to calculate the amount of oxygen absorbed.

The amount (mL) of oxygen absorbed per 1 g of the metal halide-coated iron powder is shown in Table 1.

The measurement used an oxygen analyzer (ISM-3, MOCON, Inc.), and the measurement needle was inserted through the rubber sheet into the aluminum bag and the measurement was carried out automatically for 48 hours.

Since the smaller the amount after 2 hours of oxygen absorbed, the more the initial oxygen absorption is suppressed and the easier the handling in the air becomes, the case is preferable. Specifically, since when the amount per 1 g of the metal halide-coated iron powder is 30 mL or smaller, the initial oxygen absorption is suppressed and the handling in the air becomes easy, the case is more preferable. Then, since the larger the amount after 48 hours of oxygen absorbed, the more sufficient oxygen absorption performance can be exhibited, the case is preferable. Specifically, since when the amount is 200 mL or larger, a sufficient oxygen absorption performance can be exhibited, the case is more preferable.

### [Productions of oxygen scavenger compositions and oxygen scavenger packages]

### Example 1

(1) 0.194 g (0.146 g of calcium chloride) of calcium chloride dihydrate was dissolved in 17.50 g of water to obtain a calcium chloride aqueous solution. The aqueous solution was mixed in an air atmosphere (oxygen concentration: 21% by volume) in 100 g of an atomized iron powder (manufactured by KOBE Steel, Ltd., average particle size: 100 µm (D50 diameter measured by a laser diffraction/scattering particle size distribution analyzer), specific surface area: 0.052 m²/g, proportion of iron element: 99.86% by mass), and stirred with spatula. Thereupon, the iron powder was slowly heated by self-heating to about 120°C and dried. Thereby, a metal halide-coated iron powder was obtained. The proportion of iron element in the iron powder except the metal halide and moisture in the metal halide-coated iron powder was 94.4% by mass.
(2) Then, 17.5 g of sodium chloride was dissolved in 51.5 g of water, and impregnated in 75 g of a particular diatomaceous earth (manufactured by Showa Chemical Industry Co. Ltd., average particle size: 1,000 µm (D50 diameter measured by a laser diffraction/scattering particle size distribution analyzer)) to prepare a moisture imparting agent. The moisture activity of the obtained moisture imparting agent was 75%RH.
(3) 1.00 g of the metal halide-coated iron powder obtained in the above (1) and 1.35 g of the moisture imparting agent obtained in the above (2) were filled and mixed in a bag (air-permeable packaging container) of 40 mm × 40 mm using an air-permeable laminated film (constitution: polyethylene-made nonwoven fabric ("Eleve", manufactured by Unitika Ltd.)/oil-resistant synthetic paper ("Alt", manufactured by Awa Paper & Technological Co., Inc.) to obtain an oxygen scavenger composition. Further, the opening was sealed to thereby obtain an oxygen scavenger package. The results are shown in Table 1.

### Examples 2 to 4 and 6 and Comparative Example 1

Oxygen scavenger compositions and oxygen scavenger packages were obtained as in Example 1, except for changing the amount of calcium chloride dihydrate (calcium chloride) and the amount of water to dissolve the calcium chloride in Example 1 to amounts indicated in Table 1. The results are shown in Table 1.

### Example 5

An oxygen scavenger composition and an oxygen scavenger package were obtained as in Example 1, except for changing the amount of the atomized iron powder, the amount of calcium chloride dihydrate and the amount of water in Example 1 to 3,000 g, 4.5 g (3.3 g of calcium chloride) and 527.4 g, respectively, and using a 10-L ribbon mixer (manufactured by Ono Kagaku Kikai KK) as a mixing stirring machine. The results are shown in Table 1.

### Comparative Example 2

An oxygen scavenger composition and an oxygen scavenger package were obtained as in Example 1, except for, in (1) of Example 1, using, as the iron powder, a reduced iron powder (manufactured by Hoganas AB, average particle size: 100 µm (D50 diameter measured by a laser diffraction/scattering type particle size distribution analyzer), proportion of iron element: 99.9% by mass, specific surface area: 0.085 m²/g), using an amount indicated in Table 1 of sodium chloride in place of calcium chloride dihydrate, and changing the amount of water to an amount indicated in Table 1. The results are shown in Table 1.

### [Table 1]

**Table 1**

| | Step of obtaining a metal halide-coated iron powder | | | | | Oxygen scavenger composition | | | |
|---|---|---|---|---|---|---|---|---|---|
| | Raw material iron powder | | Metal halide | | Water | Moisture amount in metal halide-coated iron powder | Proportion of iron element in iron powder | Oxygen absorption performance (amount of oxygen (mL) absorbed per 1 g of metal halide-coated iron powder) | |
| | type | Average particle diameter (µm) | type | Mass with respect to 100 g of iron powder (g) | Mass with respect to 100 g of iron powder (g) | (% by mass) | (% by mass) | After 2 hours | After 48 hour s |
| Example 1 | Atomized iron powder | 100 | Calcium chloride | 0.146 | 17.50 | 0.47 | 94.4 | 17 | 215 |
| Example 2 | Atomized iron powder | 100 | Calcium chloride | 0.296 | 17.48 | 0.69 | 94.7 | 18 | 224 |
| Example 3 | Atomized iron powder | 100 | Calcium chloride | 0.592 | 17.58 | 1.05 | 95.3 | 27 | 235 |
| Example 4 | Atomized iron powder | 100 | Calcium chloride | 0.110 | 17.58 | 0.56 | 94.7 | 18 | 229 |
| Example 5 | Atomized iron powder | 100 | Calcium chloride (mixing by ribbon mixer) | 0.110 | 17.58 | 0.53 | 93.9 | 27 | 247 |
| Example 6 | Atomized iron powder | 100 | Calcium chloride | 0.110 | 12.00 | 0.48 | 95.8 | 24 | 249 |
| Comparative Example 1 | Atomized iron powder | 100 | Calcium chloride | 0.200 | 7.40 | 0.31 | 96.8 | 70 | 260 |
| Comparative Example 2 | Reduced iron powder | 100 | Sodium chloride | 1.010 | 3.00 | 0.30 | 98.1 | 42 | 140 |

As shown in Table 1, it is clear that the oxygen scavenger compositions of the Examples were small in the amount of the oxygen absorbed until after 2 hours from being sealed in the product and were suppressed in the initial oxygen absorption. Further, it is clear that they were large in the amount after 48 hours of the oxygen absorbed and exhibited a sufficient oxygen absorption performance. Hence, the oxygen scavenger composition of the present invention is, since while the handling in the air is easy, a sufficient oxygen absorption performance can be exhibited, useful as an oxygen scavenger capable of being used for broad products including food products, industrial products and pharmaceutical products.

## Claims

1. An oxygen scavenger composition, comprising: a metal halide-coated iron powder (A) having an iron oxide on iron surface; and a moisture imparting agent (B),
wherein a proportion of iron element in the iron powder except the metal halide and moisture in the metal halide-coated iron powder (A) is 90.0 to 96.3% by mass.

2. The oxygen scavenger composition according to claim 1, wherein an average particle diameter of the metal halide-coated iron powder (A) is 30 to 500 µm.

3. The oxygen scavenger composition according to claim 1 or 2, wherein the metal halide is at least one selected from the group consisting of calcium chloride, sodium chloride, calcium bromide and sodium bromide.

4. The oxygen scavenger composition according to any one of claims 1 to 3, wherein a content of the metal halide in the metal halide-coated iron powder (A) is, with respect to 100 parts by mass of the iron powder except the metal halide and moisture in the metal halide-coated iron powder (A), 0.10 part by mass or higher and 1.00 part by mass or lower.

5. The oxygen scavenger composition according to any one of claims 1 to 4, wherein the moisture imparting agent (B) is a carrier impregnated with water.

6. The oxygen scavenger composition according to any one of claims 1 to 5, wherein the moisture imparting agent (B) comprises sodium chloride.

7. The oxygen scavenger composition according to claim 5 or 6, wherein an amount of the water contained in the moisture imparting agent (B) is, with respect to 100 parts by mass of the iron powder except the metal halide and moisture in the metal halide-coated iron powder (A), 15 to 60 parts by mass.

8. The oxygen scavenger composition according to any one of claims 5 to 7, wherein the carrier is at least one selected from the group consisting of zeolite, diatomaceous earth, silica gel, perlite, vermiculite, active alumina, activated clay, active carbon and bentonite.

9. A method for producing an oxygen scavenger composition, comprising: step 1 of mixing an iron powder (a) and an aqueous solution of a metal halide in an oxygen-containing gas atmosphere and drying the resultant to obtain a metal halide-coated iron powder (A) having an iron oxide on iron surface; and step 2 of mixing the metal halide-coated iron powder (A) and a moisture imparting agent (B), wherein an amount of the metal halide contained in the aqueous solution of a metal halide is, with respect to 100 parts by mass of the iron powder (a), 0.10 part by mass or larger and 1.00 part by mass or smaller.

10. The method for producing an oxygen scavenger composition according to claim 9, wherein an amount of the water contained in the aqueous solution of a metal halide is, with respect to 100 parts by mass of the iron powder (a), 10 to 20 parts by mass.

11. The method for producing an oxygen scavenger composition according to claim 9 or 10, wherein a concentration of the aqueous solution of a metal halide is 0.1 to 10% by mass.

12. The method for producing an oxygen scavenger composition according to any one of claims 9 to 11, wherein the step 1 comprises the drying by self-heating in the mixing.

13. The method for producing an oxygen scavenger composition according to any one of claims 9 to 12, wherein an average particle diameter of the iron powder (a) is 30 to 500 µm.

14. The method for producing an oxygen scavenger composition according to any one of claims 9 to 13, wherein the metal halide is at least one selected from the group consisting of calcium chloride, sodium chloride, calcium bromide and sodium bromide.

15. The method for producing an oxygen scavenger composition according to any one of claims 9 to 14, wherein the moisture imparting agent (B) is a carrier impregnated with water.

16. The method for producing an oxygen scavenger composition according to any one of claims 9 to 15, wherein the moisture imparting agent (B) comprises sodium chloride.

17. The method for producing an oxygen scavenger composition according to claim 15 or 16, wherein an amount of the water contained in the moisture imparting agent (B) is, with respect to 100 parts by mass of the iron powder except the metal halide and moisture in the metal halide-coated iron powder (A), 15 to 60 parts by mass.

18. The method for producing an oxygen scavenger composition according to any one of claims 15 to 17, wherein the carrier is at least one selected from the group consisting of zeolite, diatomaceous earth, silica gel, perlite, vermiculite, active alumina, activated clay, active carbon and bentonite.

19. An oxygen scavenger package, comprising: an oxygen scavenger composition according to any one of claims 1 to 8; and an air-permeable packaging container for accommodating the oxygen scavenger composition.

20. A method for producing an oxygen scavenger package, comprising accommodating an oxygen scavenger composition according to any one of claims 1 to 8 in an air-permeable packaging container.

21. A method of oxygen scavenging, comprising accommodating an oxygen scavenger composition according to any one of claims 1 to 8 or an oxygen scavenger package according to claim 19, and an article to be stored, in a gas barrier container.

22. The method of oxygen scavenging according to claim 21, wherein the article to be stored is a food product, an industrial product or a pharmaceutical product.
